(19) **Europäisches Patentamt / European Patent Office / Office européen des brevets**

(11) **EP 4 333 509 A1**

(12) **EUROPEAN PATENT APPLICATION**
published in accordance with Art. 153(4) EPC

(43) Date of publication:
06.03.2024 Bulletin 2024/10

(21) Application number: 22810307.3

(22) Date of filing: 28.04.2022

(51) International Patent Classification (IPC):
*H04W 52/02* (2009.01)

(52) Cooperative Patent Classification (CPC):
H04L 5/00; H04W 52/02; H04W 74/08; Y02D 30/70

(86) International application number:
PCT/CN2022/089920

(87) International publication number:
WO 2022/247578 (01.12.2022 Gazette 2022/48)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 26.05.2021 CN 202110580115

(71) Applicant: Huawei Technologies Co., Ltd.
Longgang
Shenzhen, Guangdong 518129 (CN)

(72) Inventors:
- XU, Xiuqiang
  Shenzhen, Guangdong 518129 (CN)
- WANG, Lei
  Shenzhen, Guangdong 518129 (CN)
- WEI, Fan
  Shenzhen, Guangdong 518129 (CN)
- CHEN, Yan
  Shenzhen, Guangdong 518129 (CN)

(74) Representative: Pfenning, Meinig & Partner mbB
Patent- und Rechtsanwälte
Theresienhöhe 11a
80339 München (DE)

(54) **DATA TRANSMISSION METHOD AND COMMUNICATION APPARATUS**

(57) Embodiments of this application provide a data transmission method and a communication apparatus, and relate to the field of communication technologies. A first communication apparatus may send first information by using a first resource; receive a first response message, where the first response message corresponds to the first resource, the first response message includes an indication information field, the indication information field indicates whether a second response message further exists, and the second response message corresponds to the first resource; and if the first response message does not correspond to the first communication apparatus, and the indication information field indicates that the second response message exists, continue to listen to the second response message. In this application, during data transmission, the first communication apparatus determines, based on whether the second response message exists in the indication field, whether to continue to listen to the second response message, instead of continuously listening to the second response message. In this manner, power consumption of a terminal device can be reduced.

FIG. 5

**Description**

**CROSS-REFERENCE TO RELATED APPLICATIONS**

This application claims priority to Chinese Patent Application No. 202110580115.2, filed with the China National Intellectual Property Administration on May 26, 2021 and entitled "DATA TRANSMISSION METHOD AND COMMUNICATION APPARATUS", which is incorporated herein by reference in its entirety.

**TECHNICAL FIELD**

Embodiments of this application relate to the field of communication technologies, and in particular, to a data transmission method and a communication apparatus.

**BACKGROUND**

In a conventional cellular network mobile communication system, for example, in a 5th generation (5th generation, 5G) long term evolution (long term evolution, LTE) system and a 5G new radio (new radio, NR) system, when a terminal is in an idle state (idle state or idle mode) or an inactive state (inactive state or inactive mode), if the terminal sends user plane (user plane, UP) data to a base station, the terminal first needs to perform a random access (random access, RA) process.

In the random access process, after sending information such as a random access preamble (Preamble) by using an Msg1 or an MsgA (Msg is short for a message), the terminal starts a time window, and continuously listens to a response message of the base station in the time window until a response message of the base station for the preamble sent by the terminal is detected through listening. However, when the base station does not detect the Msg1 or the MsgA (for example, a channel condition is poor or transmit power of the terminal is small), or the base station detects the Msg1 or the MsgA but chooses not to respond, the terminal still listens to the response message in the entire time window. In this manner, invalid listening is likely to occur, power consumption is wasted, and a delay of re-triggering random access is increased.

**SUMMARY**

This application provides a data transmission method and a communication apparatus, to reduce power consumption of a terminal device in an RA process, and improve efficiency of the random access.

According to a first aspect, this application provides a data transmission method. The method may be implemented through interaction between a first communication apparatus and a second communication apparatus. The first communication apparatus may be a terminal device, for example, user equipment (user equipment, UE) or a vehicle-mounted device. The second communication apparatus may be a transmission reception point (transmission reception point, TRP), a 5G base station (gNodeB, gNB), or the like. This is not specifically limited in this application.

When performing the data transmission method in this application, the first communication apparatus may send first information by using a first resource, and correspondingly, the second communication apparatus may receive the first information by using the first resource. Then, the second communication apparatus may send a first response message. The first response message corresponds to the first resource. The first response message includes an indication information field. The indication information field indicates whether a second response message further exists, and the second response message also corresponds to the first resource. Correspondingly, the first communication apparatus may receive the first response message. If the second response message exists in the indication information field, the second communication apparatus sends the second response message. If the first response message does not correspond to the first communication apparatus, and the indication information field indicates that the second response message exists, the first communication apparatus continues to listen to the second response message.

It should be noted that the first resource may be understood as a time-frequency resource. Different first communication apparatuses may transmit a message by using the time domain resource. For example, UE 1, UE 2, and UE 3 all send the first information by using the first resource. In addition, the time-frequency resource may include a plurality of resources with the same time domain but different frequency domains, or may include a plurality of resources with the same frequency domain but different time domains, or may include a plurality of resources with different time domains and frequency domains. This is not specifically limited herein in this application. In this case, the UE may select one of the resources to send the first information. The first information may be data transmitted by the first communication apparatus to the second communication apparatus or access information for establishing a communication connection (for example, a radio resource control (radio resource control, RRC) connection) between the first communication apparatus and the second communication apparatus. This is not specifically limited in this application. Herein, the same time domain means that time domain resources completely overlap, the same frequency domain means that frequency domain resources completely overlap. Different time domains mean that time domain resources partially overlap or do not overlap at all, and different frequency domains mean that frequency domain resources partially overlap or do not overlap at all.

It should be further noted that, in actual application, a plurality of first communication apparatuses may transmit data to the second communication apparatus, or establish a communication connection to the second communication apparatus. In this case, the second communication apparatus may receive a plurality of first messages. Then, the second communication apparatus sends the first response message for the plurality of first messages. Each first communication apparatus determines, based on indication information of the indication information field in the first response message, whether to continue to listen. For example, the UE 1 listens to the first response message from the gNB, and finds that the first response message is not for the UE 1. However, the first response message indicates that the second response message exists, then the UE 1 continues to listen. The UE 2 listens to the first response message from the gNB. If the first response message is for the UE 2, the UE 2 stops listening.

Compared with continuously listening to the response message in an entire listening period, in this application, carrying the indication information field in the first response message indicates whether the second response message exists. The first communication apparatus may determine, based on existence of the second response message, whether to continue to listen. When determining that the second response message does not exist, that is, when determining that the second communication apparatus stops sending the second response message, the first communication apparatus stops listening, so that power consumption can be reduced, and data can be resent or a connection to the second communication apparatus can be established, thereby improving data processing efficiency and access efficiency.

In an optional manner, if the first response message corresponds to the first communication apparatus, or if the first response message does not correspond to the first communication apparatus, and the indication information field indicates that the second response message does not exist, the listening is stopped.

For example, the UE 1 listens to the first response message from the gNB, and finds that the first response message is for the UE 1. The UE 1 stops listening, or the UE 1 determines that the second response message does not exist, and also stops listening. In this manner, power consumption of the first communication apparatus can be reduced.

In an optional manner, the indication information field includes 1 bit. The bit may indicate whether the second communication apparatus delivers the second response message. For example, the indication information field indicates, by using 1, that the second communication apparatus delivers the second response message, and indicates, by using 0, that the second communication apparatus does not deliver the second response message. Alternatively, the indication information field may indicate in another manner. This is not specifically limited herein in this application. In this case, after receiving the first response message, the first communication apparatus may determine, based on a value of the bit in the indication information field, whether to continue to listen. For example, if the UE 1 receives the first response message, and the first response message is not for the UE 1, the UE 1 determines the value of the bit in the indication information field. If the value is 1, the UE 1 continues to listen, and if the value is 0, the UE 1 stops listening. In this manner, power consumption of the first communication apparatus can be reduced.

In an optional manner, the indication information field includes X bits, the X bits indicate a plurality of preambles or a plurality of pieces of reference signal information, $X \geq 2$, and values corresponding to the X bits include a value indicating that the second response message does not exist. The reference signal herein may be a demodulation reference signal (demodulation reference signal, DMRS), a sounding reference signal (sounding reference signal, SRS), or the like.

It should be noted that, in actual application, the preamble or the reference signal may be grouped. One or more bits in the indication information field indicate whether a second response message exists for a preamble group or a reference signal group. For example, the UE 1 to UE 8 select a preamble or a reference signal in a preamble or reference signal group 1 to send the first information. UE 9 to UE 16 select a preamble or a reference signal in a preamble or reference signal group 2 to send the first information. UE 17 to UE 24 select a preamble or a reference signal in a preamble or reference signal group 3 to send the first information. The indication information indicates, by using 3 bits, whether a second response message for these preamble or reference signal groups exists. For example, 000 indicates that a second response message for the preamble or reference signal group 1 and the preamble or reference signal group 2 further exists, but a second response message for the preamble or reference signal group 3 does not exist. In this case, the UE 1 to the UE 8 may choose to continue to listen, the UE 9 to the UE 16 may also choose to continue to listen, and the UE 17 to the UE 24 stop listening. 001 indicates that a second response message for the preamble or reference signal group 1 further exists, but a second response message for the preamble or reference signal group 2 and the preamble or reference signal group 3 does not exist. In this case, the UE 1 to the UE 8 may choose to continue to listen, the UE 9 to the UE 16 and the UE 17 to the UE 24 stop listening. 111 indicates that no second response message for the three groups of preambles or reference signals exists. In this case, none of the UE 1 to the UE 24 needs to continue to listen. The descriptions are made as an example herein in this application, and constitute no specific limitation.

In an optional manner, each of the X bits corresponds to one preamble group or one DMRS group. Herein, only an example in which each bit corresponds to one preamble group is used for description. For example, the UE 1 to the UE 8 select the preamble or reference signal group 1, the UE 9 to the UE 16 select the preamble or reference signal group 2, the UE 17 to the UE 24 select the preamble or reference signal group 3. The indication information field is indicated by using 3 bits, where 110 indicates that a second response message for the preamble or reference signal group 1 and the preamble or reference signal group 2 further exists, but a second response message for the preamble or reference signal group 3 does not exist. In this case, the UE 1 to the UE 8 may choose to continue to listen, the UE 9 to the UE 16 may also choose to continue to listen, and the UE 17 to the UE 24 stop listening, and 000 indicates that no second response message for the three groups of preambles or reference signals exists. In this case, none of the UE 1 to the UE 24 needs to continue to listen.

In an optional manner, that the first response message does not correspond to the first communication apparatus indicates that the first response message does not include a preamble identifier sent by the first communication apparatus, and the first response message does not include information used for identifying the first communication apparatus, for example, an ID of the first communication apparatus. In this application, the first communication apparatus may determine, based on whether a preamble identifier corresponding to the first response message exists in the first response message, whether the first response message is for the first communication apparatus.

In an optional manner, the first communication apparatus listens to the first response message or the second response message in a preset time window. The second communication apparatus sends the first response message or the second response message in the preset time window. A length of the preset time window of the first communication apparatus may be the same as or different from a length of the preset time window of the second communication apparatus. This is not specifically limited in this application.

In an optional manner, the first information is random access information or grant free transmission data. Because a communication connection may have been established between different first communication apparatuses and the second communication apparatus, data only needs to be transmitted to the second communication apparatus. The first information sent by the first communication apparatus may be the grant free transmission data. However, no communication connection may be established between the first communication apparatus and the second communication apparatus. Therefore, the random access information needs to be sent. This is not specifically limited herein, and needs to be specifically determined with reference to an actual application scenario. It may be understood that a difference between the random access information and the grant free transmission data lies in that the random access information includes a preamble, and the grant free transmission data does not include a preamble.

According to a second aspect, this application provides a first communication apparatus, including an input/output unit and a processing unit.

The input/output unit is configured to: send first information by using a first resource; and receive a first response message, where the first response message corresponds to the first resource, the first response message includes an indication information field, the indication information field indicates whether a second response message further exists, and the second response message corresponds to the first resource. The processing unit is configured to: if the first response message does not correspond to the first communication apparatus, and the indication information field indicates that the second response message exists, continue to listen to the second response message.

In an optional manner, the processing unit is further configured to: if the first response message corresponds to the first communication apparatus, or if the first response message does not correspond to the first communication apparatus, and the indication information field indicates that the second response message does not exist, stop listening.

In an optional manner, the indication information field includes 1 bit.

In an optional manner, the indication information field includes X bits, the X bits indicate a plurality of preambles preambles or a plurality of pieces of reference signal information, $X \geq 2$, and values corresponding to the X bits include a value indicating that the second response message does not exist.

In an optional manner, each of the X bits corresponds to one preamble or reference signal group.

In an optional manner, that the first response message does not correspond to the first communication apparatus indicates that the first response message does not include a preamble identifier sent by the first communication apparatus or an identifier of the first communication apparatus.

In an optional manner, the first response message or the second response message is listened in a preset time window.

In an optional manner, the first information is random access information or grant free transmission data.

According to a third aspect, this application provides a second communication apparatus, including an input/output unit and a processing unit.

The input/output unit is configured to receive first information by using a first resource, and send a first response message, where the first response message corresponds to the first resource, the first response message includes an indication information field, the indication information field indicates whether a second response message further exists, and the second response message corresponds to the first resource.

The processing unit is configured to send the second response message if the second response message exists in the indication information field.

In an optional manner, the indication information field includes 1 bit.

In an optional manner, the indication information field includes X bits, the X bits indicate a plurality of preambles or a plurality of pieces of reference signal information, $X \geq 2$, and values corresponding to the X bits include a value indicating that the second response message does not exist.

In an optional manner, each of the X bits corresponds to one preamble or reference signal group.

In an optional manner, the first response message or the second response message is sent in a preset time window.

In an optional manner, the first information is random access information or grant free transmission data.

According to a fourth aspect, this application provides a communication apparatus, including at least one processor and a memory. The memory is configured to store a computer program or instructions. When the apparatus runs, the at least one processor executes the computer program or the instructions, so that the communication apparatus performs the method according to the first aspect or the implementations of the first aspect.

According to a fifth aspect, this application provides another communication apparatus, including an interface circuit and a logic circuit. The interface circuit may be understood as an input/output interface. The logic circuit may be configured to run code instructions to perform the method in the first aspect or the implementations of the first aspect.

According to a sixth aspect, this application further provides a computer-readable storage medium. The computer-readable storage medium stores computer-readable instructions. When the computer-readable instructions are run on a computer, the computer is enabled to perform the method according to any one of the first aspect or the possible designs of the first aspect.

According to a seventh aspect, this application provides a computer program product including instructions. When the computer program product is run on a computer, the computer is enabled to perform the method in the first aspect or the implementations of the first aspect.

According to an eighth aspect, this application provides a chip system. The chip system includes a processor, and may further include a memory, configured to implement the method in any one of the first aspect or the possible designs of the first aspect. The chip system may include a chip, or may include a chip and another discrete device.

According to a ninth aspect, this application provides a communication system. The system includes a first communication apparatus and a second communication apparatus. The communication system is configured to perform the method in any one of the first aspect or the possible designs of the first aspect.

For technical effects that can be achieved in the second aspect to the ninth aspect, refer to descriptions of technical effects that can be achieved in the corresponding possible design solutions in the first aspect. Details are not described herein again in this application.

## BRIEF DESCRIPTION OF DRAWINGS

FIG. 1A is a schematic diagram of a communication system according to an embodiment of this application;

FIG. 1B is a schematic diagram of another communication system according to an embodiment of this application;

FIG. 2 is a schematic diagram of a data transmission method;

FIG. 3 is a schematic flowchart of 2-step RA;

FIG. 4 is a schematic flowchart of 4-step RA;

FIG. 5 is a schematic flowchart of a data transmission method according to an embodiment of this application;

FIG. 6 is a schematic diagram of an application scenario of a data transmission method according to an embodiment of this application;

FIG. 7 is a schematic diagram of an application scenario of a data transmission method according to an embodiment of this application;

FIG. 8 is a schematic diagram of an application scenario of a data transmission method according to an embodiment of this application;

FIG. 9 is a schematic diagram of an application scenario of a data transmission method according to an embodiment of this application;

FIG. 10 is a schematic diagram of a structure of a communication apparatus according to an embodiment of this application;

FIG. 11 is a schematic diagram of a structure of a communication apparatus according to an embodiment of this application; and

FIG. 12 is a schematic diagram of a structure of a communication apparatus according to an embodiment of this application.

**DESCRIPTION OF EMBODIMENTS**

To make the objectives, technical solutions, and advantages of this application clearer, the following further describes this application in detail with reference to the accompanying drawings. A specific operation method in method embodiments may also be applied to apparatus embodiments or system embodiments. In the descriptions of this application, unless otherwise specified, "a plurality of" means two or more. Therefore, for implementations of the apparatus and the method, reference may be made to each other, and repeated parts are not described again.

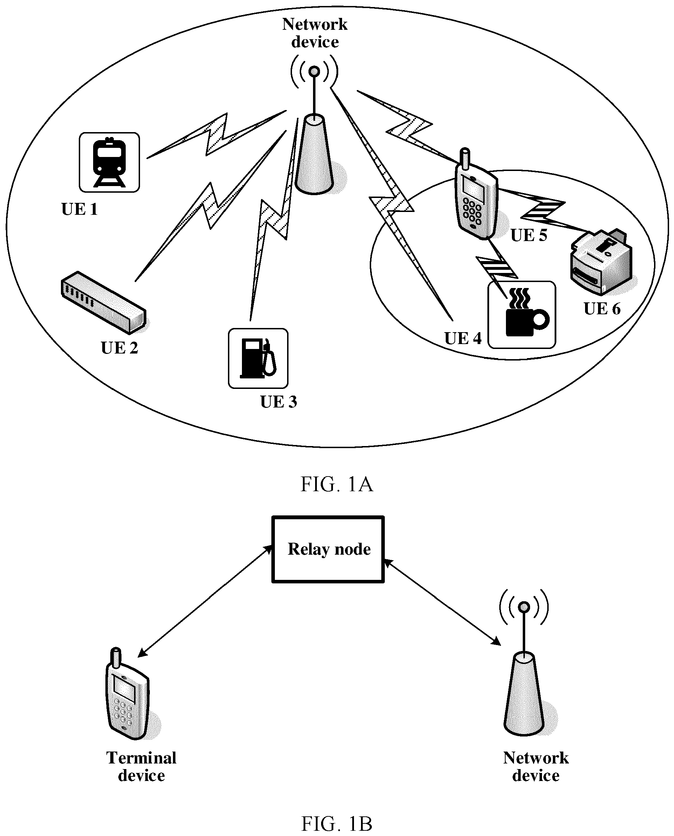

This application may be applied to a 5G NR system, or may be applied to another communication system, for example, a next generation communication system. As shown in FIG. 1A, when a second communication apparatus is a network device, and the first communication apparatus is a terminal device (for example, UE), the network device and UE 1 to UE 6 form a communication system. In the communication system, the UE 1 to the UE 6 may send information to the network device, and the network device may receive the information sent by the UE 1 to the UE 6, and feed back a response message.

In addition, the UE 4 to the UE 6 may also form a communication system. In this case, the first communication apparatus and the second communication apparatus may each be terminal devices. For example, in an Internet of Vehicles system, a terminal device 1 sends configuration information to a terminal device 2, and receives data sent by the terminal device 2. The terminal device 2 receives the configuration information sent by the terminal device 1, and sends data to the terminal device 1.

A communication system in which this application may be used may be further shown in FIG. 1B. A single-hop (single-hop) or multi-hop (multi-hop) relay of a relay node exists in the communication system. The relay node may be a small cell, an integrated access and backhaul (integrated access and backhaul, IAB) node, a distributed unit (distributed unit, DU), a terminal device, a transmission and reception point (transmission and reception point, TRP), or the like. Details are not described herein in this application.

The network device is an apparatus that is deployed in a radio access network to provide a wireless communication function for a terminal device. An access network device is a device having a wireless transmitting and receiving function or a chip that can be disposed in the device. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a radio relay node, a wireless backhaul node, a transmission point (transmission and reception point, TRP, or transmission point, TP), or the like, or may be a gNB in a 5G (for example, NR) system, or a transmission point (TRP or TP), or one or a group of antenna panels (including a plurality of antenna panels) of a base station in the 5G system, or may be a network node that forms a gNB or a transmission point, for example, a baseband unit (BBU), a DU, a satellite, or an unmanned aerial vehicle.

In some deployments, the gNB may include a central unit (central unit, CU) and a DU. The gNB may further include a radio frequency unit (radio unit, RU). The CU implements some functions of the gNB, and the DU implements some functions of the gNB. For example, the CU implements functions of RRC and a packet data convergence layer protocol (packet data convergence protocol, PDCP) layer, and the DU implements functions of a radio link control (radio link control, RLC) layer, a media access control (media access control, MAC) layer, and a physical (physical, PHY) layer. Information of the RRC layer is finally changed to information of the PHY layer (that is, sent by using the PHY layer), or is converted from the information of the PHY layer. Therefore, in this architecture, higher layer signaling, for example, RRC-layer signaling or PDCP-layer signaling, may also be considered to be sent by the DU, or sent by the DU and the RU. It may be understood that the access network device may be a CU node, a DU node, or a device including the CU node and the DU node. In addition, the CU may be classified as a network device in an access network RAN, or the CU may be classified as a network device in a core network CN. This is not limited herein.

The terminal device in embodiments of this application may also be referred to as a terminal, and is an entity on a user side configured to receive or transmit a signal, and is configured to send an uplink signal to a network device, or receive a downlink signal from the network device. The terminal device includes a device that provides a user with voice and/or data connectivity, for example, may include a handheld device with a wireless connection function, or a processing device connected to a wireless modem. The terminal device may communicate with a core network by using a radio access network (radio access network, RAN), and exchange voice and/or data with the RAN. The terminal device may include UE, a V2X terminal device, a wireless terminal device, a mobile terminal device, a device-to-device (device-to-device, D2D) terminal device, a machine-to-machine/machine-type communication (machine-to-machine/machine-type communications, M2M/MTC) terminal device, an Internet of Things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), and a user terminal (user terminal), a user agent (user agent), or user equipment (user equipment), a wearable device, a vehicle-mounted device, an unmanned aerial vehicle, or the like.

As an example instead of a limitation, in embodiments of this application, the terminal device may alternatively be a wearable device. The wearable device may also be referred to as a wearable intelligent device, an intelligent wearable device, or the like, and is a general term of wearable devices that are developed by using a wearable technology to perform intelligent design on daily wearing, such as glasses, gloves, watches, clothes, and shoes. The wearable device is a portable device that is directly worn on a body or integrated into the user's clothes or accessories. The wearable device is not only a hardware device, but also implements a powerful function through software support, data exchange, and cloud interaction. Generalized wearable intelligent devices include full-featured and large-size devices, such as smart watches or smart glasses, that can implement all or some functions without depending on smartphones, and devices, such as various smart bands, smart helmets, or smart jewelry for monitoring vital signs, that focus on only one type of application functions and need to work with other devices such as smartphones.

If various terminal devices described above are located on a vehicle (for example, placed in the vehicle or installed in the vehicle), the terminal devices may be considered as vehicle-mounted terminal devices. The vehicle-mounted terminal devices are, for example, also referred to as on-board units (on-board units, OBU).

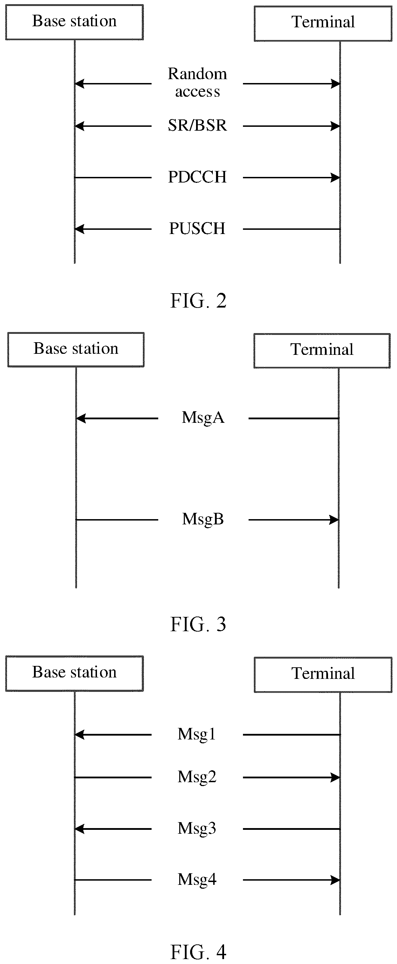

It should be noted that, in the communication systems shown in FIG. 1A and FIG. 1B, if a terminal needs to send UP data to a base station, the terminal first needs to perform a random access RA process, enter an active/connected state (Active/Connected State or Active/Connected Mode), and then sends a scheduling request (Scheduling Request, SR) to the base station through a physical uplink control channel (physical uplink control channel, PUCCH) or reports a buffer status (buffer status, BS) to the base station through a physical uplink shared channel (physical uplink shared channel, PUSCH). After receiving the SR or the buffer status report (buffer status report, BSR) sent by the terminal, the base station sends downlink control information (downlink control information, DCI) to the terminal through a downlink physical control channel (physical downlink control channel, PDCCH). The DCI carries uplink grant (UL Grant) that is used for authorizing the terminal to use a specified parameter on a specified time-frequency resource, for example, a specified modulation and coding scheme (modulation and coding scheme, MCS), to send uplink data. This process is shown in FIG. 2. The buffer status report is usually sent by using medium access control (medium access control, MAC) layer signaling, and is carried in a MAC control element (control element, CE) in a packet header.

It should be further noted that random access may be generally classified into two types: two-step random access 2-step RA (as shown in FIG. 3) and four-step random access 4-step RA (as shown in FIG. 4).

In the 2-step RA, a terminal sends an MsgA to a base station. The MsgA is formed by a physical random access channel (physical random access channel, PRACH) and a PUSCH. The PRACH is configured to send a random access preamble preamble, and the PUSCH is configured to send control plane (control plane, CP) and/or user plane data. After receiving the MsgA, the base station sends an MsgB to the terminal. If the base station correctly decodes the PUSCH in the MsgA, the MsgB is referred to as a success RAR, and includes a contention resolution (contention resolution) message. If the base station does not correctly decode the PUSCH, the MsgB is referred to as fallback (fallback) RAR. After receiving the fallback RAR, the terminal falls back to the 4-step RA based on uplink grant (UL grant) carried in the fallback RAR, and sends an Msg3 to the base station.

In the 4-step RA, the terminal first sends a preamble, that is, an Msg1, to the base station through the PRACH. After receiving the Msg1, the base station sends an RAR, that is, an Msg2, to the terminal. The terminal sends the Msg3 to the base station based on the UL grant included in the RAR. The Msg3 carries the control plane and/or user plane data. After correctly receiving the Msg3, the base station sends a contention resolution message, that is, an Msg4, to the terminal, where the Msg4 may also carry the control plane and/or user plane data. When the Msg3 or the Msg4 carries the user plane data, the 4-step RA may also be referred to as early data transmission (early data transmission, EDT).

In short, the MsgA in the 2-step RA can be considered as a combination of the Msg1 and the Msg3 in the 4-step RA, and the MsgB can be considered as a combination of the Msg2 and the Msg4 in the 4-step RA. Therefore, the 2-step RA can achieve a shorter access delay and lower terminal power consumption than the 4-step RA.

Random access may also be classified into contention-based random access (contention-based RA, CBRA) and non-contention-based random access (contention-free RA, CFRA) based on whether the terminal uses random access resources in a contention-based manner. For the CBRA, the base station usually delivers a random access resource allocation instruction through common radio resource control (radio resource control, RRC) signaling such as system information (system information, SI), and configures a PRACH resource pool and a preamble resource pool for random access of the terminal. When performing random access, the terminal selects a PRACH and a preamble from the configured PRACH resource pool and preamble resource pool, and sends the selected preamble by using the selected PRACH resource. In the case of 2-step RA, the terminal further sends the control plane and/or user plane data by using a PUSCH resource associated with the selected PRACH and the preamble. The PUSCH resource is also configured by the base station by using the common RRC signaling such as the system information SI. A reason why the PUSCH resource needs to be associated with the PRACH resource and the preamble is to reduce complexity of a blind detection of the base station. After knowing the association relationship, the base station may determine the PUSCH resource based on the detected preamble, so that PUSCH receiving and demodulation can be directly performed, thereby avoiding PUSCH blind detection or reducing the quantity of blind detections. In the CBRA, different terminals may select the same PRACH resource and preamble to perform contention-based random access. For the CFRA, when the terminal performs random access, there is no contention relationship, because the base station usually indicates, by using dedicated signaling such as an RRC message or DCI, a PRACH resource and/or a preamble used by the terminal for random access.

For the CBRA, after sending the Msg1 or the MsgA, the terminal starts a response time window (hereinafter a time window for short), and listens to a response message, that is, the Msg2 or the MsgB, from the base station in the time window. A specific listening method is generally as follows: The terminal determines a radio network temporary identify (radio network temporary identity, RNTI) based on a PRACH resource for sending a preamble, listens to a PDCCH configured to schedule the Msg2 or the MsgB, in a time window by using the RNTI, and further receives the Msg2 or the MsgB based on an indication of the PDCCH. Taking the 4-step RA as an example, when a plurality of terminals select the same PRACH resource to send a preamble, RNTIs determined by the plurality of terminals are the same, and the plurality of terminals listens to, by using the RNTI in the same time window, a PDCCH configured to schedule the Msg2. In this case, the terminal needs to determine, by using a preamble identifier (random access preamble identifier, RAP ID) carried in the Msg2, whether the received Msg2 is for the terminal. For example, when a terminal detects a PDCCH through listening and correctly decodes the Msg2 scheduled by the PDCCH, if it is determined that the RAP ID carried in the Msg2 received by the Msg2 is the same as an ID of a preamble sent by the terminal, the terminal considers that the response is for the terminal, and then the terminal stops the time window, and sends the Msg3 based on an indication of UL grant carried in the response. When one of the following cases occurs, the terminal continues to listen to the PDCCH by using the determined RNTI until the time window ends: The terminal detects the PDCCH through listening but does not correctly decode the scheduled Msg2; and the terminal decodes the Msg2 but finds that the Msg2 does not carry a RAP ID that is the same as the preamble ID sent by the terminal. If the terminal fails to correctly receive the Msg2 for the terminal until the time window ends, the terminal may reselect a PRACH resource and a preamble, and resend the Msg1. For the 2-step RA, the situation is similar to that of the 4-step RA. A difference lies in that, after sending the MsgA, the terminal may receive a fallback RAR for the preamble sent by the terminal, or may receive a success RAR for the terminal. For the former case, the situation is the same as that of the 4-step RACH. For the latter case, the success RAR carries a contention resolution CR ID sent by the terminal in the MsgA instead of the RAP ID, that is, if the terminal determines that the CR ID carried in the MsgB is the same as the CR ID sent by the terminal in the MsgA, the terminal considers that the MsgB is for the terminal, and then the terminal stops the time window. The CR ID herein may also be understood as an ID used to identify the terminal. When one of the following cases occurs, the terminal continues to listen to the PDCCH by using the determined RNTI until the time window ends:

The terminal detects the PDCCH through listening but does not correctly decode the scheduled MsgB. The terminal decodes the MsgB but finds that the MsgB does not carry the RAP ID that is the same as the preamble ID sent by the terminal and does not carry the CR ID that is the same as the CR ID sent by the terminal.

If the terminal fails to correctly receive the MsgB for the terminal until the time window ends, the terminal may reselect a PRACH resource and a preamble, and resend the Msg1 or the MsgB.

In addition, regardless of random access, the terminal needs to send a preamble to the base station through the PRACH channel, so that the base station estimates timing advance (timing advance, TA) of the terminal. However, in some scenarios, for example, the terminal has obtained an accurate TA, or a cell radius is small, the terminal does not need to obtain a TA again each time before data transmission. In this case, sending a preamble each time actually increases power consumption of the terminal. In this way, the third generation partnership project (3rd generation partnership project, 3GPP) introduces uplink grant free (grant free, GF) transmission in an idle state and an inactive state, such as pre-configured uplink resource (pre-configured uplink resource, PUR) transmission and configured grant (configured grant, CG) transmission (for example, Type 1 CG). The two types of GF transmission are performed by the base station by using RRC signaling, for example, may be a system message or other dedicated RRC signaling. The uplink transmission configuration for the terminal includes one or more of the following parameters: a cycle of a time domain resource, an open-loop power control-related parameter, a waveform, a redundancy version sequence, a quantity of repetitions, a frequency hopping mode, a resource allocation type, a quantity of hybrid automatic repeat request (hybrid automatic repeat request, HARQ) processes, a demodulation reference signal (demodulation reference signal, DMRS)-related parameter, a modulation and coding scheme table, a size of resource block group (resource block group, RBG), and a time domain resource, a frequency domain resource, an MCS, and the like. After receiving the configuration information, if there is data to be transmitted, the terminal may immediately perform PUSCH transmission on the configured time-frequency resource by using the configured transmission parameter, without first sending a preamble, thereby reducing overheads and power consumption. The same mechanism may also be used for listening to a response of the GF transmission as random access. To be specific, the terminal determines an RNTI based on information about a resource for sending the PUSCH, and then listens to a response message in the time window by using the RNTI, and the like.

The base station does not respond to the Msg1 or the MsgA sent by the terminal in the following cases: The base station does not detect the Msg1 or the MsgA (for example, a channel condition is poor or transmit power of the terminal is very low), or the base station detects the Msg1 or the MsgA but chooses not to respond. In the two cases, because the terminal does not know, the terminal still listens to a possible response message in an entire time window, so that invalid listening and a waste of power consumption are caused, and a delay of re-triggering random access is increased. Based on this, this application proposes a new data transmission method to reduce power consumption of the terminal device and improve random access efficiency.

In the descriptions of embodiments of this application, "and/or" describes an association relationship between associated objects and represents that three relationships may exist. For example, A and/or B may represent the following three cases: Only A exists, both A and B exist, and only B exists. The character "three types" generally indicates that the associated objects are in an "or" relationship. In this application, at least one means one or more, and a plurality of means two or more. In addition, it should be understood that, in the description of this application, terms "first" and "second" are only used to distinguish the purpose of the description, but cannot be understood as indication or implication of relative importance, and cannot be understood as an indication or implication of a sequence.

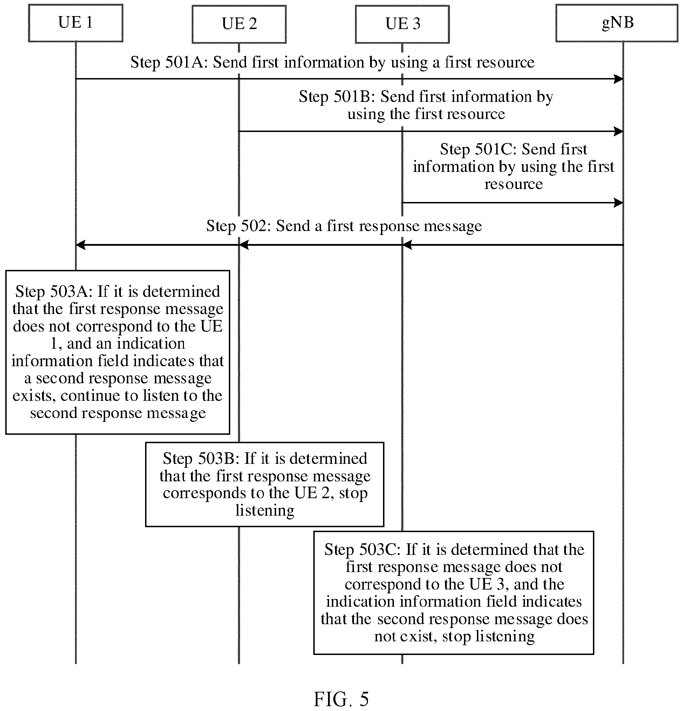

The data transmission method provided in this application may be applied to a first communication apparatus, or may be applied to a second communication apparatus, or may be implemented through interaction between the first communication apparatus and the second communication apparatus. This is not specifically limited in this application. FIG. 5 shows a process in which a first communication apparatus interacts with a second communication apparatus to implement data transmission. In the figure, an example in which the first communication apparatus is UE 1, UE 2, and UE 3, and the second communication apparatus is a gNB is used for description. Specific execution may be as follows:

Step 501A: The UE 1 sends first information by using a first resource.
Step 501B: The UE 2 sends first information by using the first resource.
Step 501C: The UE 3 sends first information by using the first resource.

Correspondingly, the gNB receives the first information from the UE 1 to the UE 3. In addition, execution of the foregoing step 501A to step 501C are not subject to a particular sequence, provided that the first resource is the same time-frequency resource. The first resource may be a time-frequency resource, or may be a set of a plurality of resources same in time domain but different in frequency domain, or same in frequency domain but different in time domain, or different in both time domain and frequency domain. In this case, the UE may select one of the first resources to send the first information. Different UE may transmit a message by using the first resource. For example, the UE 1, the UE 2, and the UE 3 all send the first information in a slot 1. The first information may be data transmitted by the UE, for example, grant free transmission data, or access information for establishing a communication connection between the UE and the gNB, for example, random access information. The first information may be understood as the Msg1 or the MsgA. This is not specifically limited herein in this application.

Step 502: The gNB sends a first response message to the UE 1, the UE 2, and the UE 3.

Correspondingly, the UE 1 to the UE 3 may receive the first response message from the gNB. The first response message corresponds to the first resource. The first response message includes an indication information field. The indication information field indicates whether a second response message further exists, and the second response message also corresponds to the first resource. If the second response message exists in the indication information field, the gNB sends the second response message.

Step 503A: If the UE 1 determines that the first response message does not correspond to the UE 1, and the indication information field indicates that the second response message exists, the UE 1 continues to listen to the second response message. It should be noted that when the first information is the Msg1, that the first response message does not correspond to the UE 1 may be understood as that the first response message does not include a preamble identifier sent by the UE 1. When the first information is the MsgA, that the first response message does not correspond to the UE 1 may be understood as that the first response message does not include the preamble identifier sent by the UE 1 and does not include an identifier of the UE 1.

Step 503B: If the UE 2 determines that the first response message corresponds to the UE 2, the UE 2 stops listening.

Step 503C: If the UE 3 determines that the first response message does not correspond to the UE 3, and the indication information field indicates that the second response message does not exist, the UE 3 stops listening.

The foregoing steps 503A to 503C are merely examples for description, and an execution sequence of the steps is not specifically limited.

It should be further noted that the UE may listen to the first response message or the second response message in a preset time window. The gNB may also send the first response message or the second response message in the preset time window. A length of the preset time window of the UE may be the same as or different from a length of the preset time window of the gNB. This is not specifically limited in this application.

Compared with continuous listening to a response message in an entire listening period, in this application, carrying the indication information field in the first response message indicates whether the second response message exists, and the first communication apparatus may determine, based on existence of the second response message, whether to continue to listen. When the first communication apparatus determines that the second response message does not exist, the listening is stopped, so that power consumption can be reduced, and data can be resent or a connection to the second communication apparatus can be established, thereby improving data processing efficiency and access efficiency.

In an optional manner, the indication information field may include 1 bit. The bit may indicate whether the gNB delivers the second response message. For example, the indication information field indicates, by using 1, that the gNB delivers the second response message, and indicates, by using 0, that the gNB does not deliver the second response message. Alternatively, the indication information field may indicate in another manner. This is not specifically limited in this application. After receiving the first response message, the UE may determine, based on a value of the bit in the indication information field, whether to continue to listen. For example, if the UE 1 receives the first response message, and the first response message is not for the UE 1, the UE 1 determines the value of the bit in the indication information field. If the value is 1, the UE 1 continues to listen, and if the value is 0, the UE 1 stops listening, or conversely, if the value is 0, the UE 1 continues to listen, and if the value is 1, the UE 1 stops listening. With the same effect, details are not described below. In this manner, power consumption of the first communication apparatus can be reduced.

In an optional manner, the indication information field may include X bits that indicate an ID of the at least one UE.

In an optional manner, the indication information field may include X bits, the X bits indicate a plurality of preambles, $X \geq 2$, and values corresponding to the X bits include a value indicating that the second response message does not exist. The gNB may directly indicate a preamble for which the second response message exists. For example, a second response message exists for a preamble 1, a preamble 3, and a preamble 5.

It should be noted that, in actual application, if the first information is the Msg1 or the MsgA, the preambles may be grouped (for example, the preamble 1 to the preamble 8 are grouped into a preamble group 1, the preamble 16 to the preamble 24 are grouped into a preamble group 2, and the preamble 48 to the preamble 56 are grouped into a preamble group 3. In addition, there may be another grouping manner, which is not specifically limited in this application, and which preamble group the UE selects to send the first information is not limited in this application). One or more bits in the indication information field indicate whether the second response message exists for a preamble group. As shown in Table 1, the UE 1 to the UE 8 select a preamble in the preamble group 1 to send the first information, the UE 9 to the UE 16 select a preamble in the preamble group 2 to send the first information, the UE 17 to the UE 24 select a preamble in the preamble group 3 to send the first information. The indication information indicates, by using 3 bits, whether a second response message for these preamble groups exists. For example, 000 indicates that a second response message for the preamble group 1 and the preamble group 2 further exists, but a second response message for the preamble group 3 does not exist. In this case, the UE 1 to the UE 8 may choose to continue to listen, the UE 9 to the UE 16 may also choose to continue to listen, and the UE 9 to the UE 16 stop listening. The descriptions are made as an example herein in this application, and constitute no specific limitation. Table 1 is merely described as an example herein, and does not specifically limit which bit values specifically indicate which preamble groups have the second response message.

**Table 1**

| Indication information field | |
|---|---|
| 000 | UE that selects the preamble group 1 or the preamble group 2 continues to listen and UE that selects the preamble group 3 stops listening. |
| 001 | UE that selects the preamble group 1 continues to listen and UE that selects the preamble group 2 or the preamble group 3 stops listening. |
| 010 | UE that selects the preamble group 1 or the preamble group 3 stops listening and UE that selects the preamble group 2 continues to listen. |
| ... | ... |
| 111 | All UE that selects the preamble group 1, the preamble group 2, or the preamble group 3 stops listening. |

In addition, each of the X bits may correspond to one preamble group. Herein, an example in which the indication information field indicates, by using 1, that the gNB delivers the second response message for the preamble group, and indicates, by using 0, that the gNB does not deliver the second response message for the preamble group is used for description. For example, the UE 1 to the UE 8 select a preamble in the preamble group 1 to send the first information, the UE 9 to the UE 16 select a preamble in the preamble group 2 to send the first information, the UE 17 to the UE 24 select a preamble in the preamble group 3 to send the first information. The indication information field is indicated by using 3 bits. A first bit indicates whether a second response message for the preamble group 1 exists, a second bit indicates whether a second response message for the preamble group 2 exists, and a third bit indicates whether a second response message for the preamble group 3 exists. As shown in Table 2, 110 indicates that the second response message exists in the preamble group 1, the second response message exists in the preamble group 2, and the second response message does not exist in the preamble group 3. In this case, the UE 1 to the UE 8 may continue to listen, the UE 9 to the UE 16 may also continue to listen, and the UE 9 to the UE 16 stop listening. Table 2 is merely described as an example herein, and does not specifically limit which bit values specifically indicate which preamble groups have the second response message.

**Table 2**

| Indication information field | |
|---|---|
| 110 | UE that selects the preamble group 1 and the preamble group 2 continues to listen and UE that selects the preamble group 3 stops listening. |
| 100 | UE that selects the preamble group 1 continues to listen and UE that selects the preamble group 2 and preamble group 3 stops listening. |
| 001 | UE that selects the preamble group 1 and the preamble group 3 stops listening and UE that selects the preamble group 2 continues to listen. |
| ... | ... |
| 000 | All UE that selects the preamble group 1, the preamble group 2, or the preamble group 3 stops listening. |

In actual application, if the first information is grant free transmission data, a plurality of reference signals such as DMRSs may be grouped. The indication information field may include X bits, the X bits indicate the plurality of DMRSs, $X \geq 2$, and values corresponding to the X bits include a value indicating that the second response message does not exist. The gNB may directly indicate DMRSs for which the second response messages exists. For example, a second response message exists for a DMRS 1, a DMRS 3, and a DMRS 5.

In addition, the DMRSs may be grouped (for example, the DMRS 1 to a DMRS 8 are grouped into a DMRS group 1, a DMRS 16 to a DMRS 24 are grouped into a DMRS group 2, and a DMRS 48 to a DMRS 56 are grouped into a DMRS group 3, in addition, there may be another grouping manner, which is not specifically limited in this application, and a DMRS in which DMRS group the UE selects to send the first information is not limited in this application). As shown in Table 3, the UE 1 to the UE 8 select a DMRS in the DMRS group 1 to send the first information, and the UE 9 to the UE 16 select a DMRS in the DMRS group 2 to send the first information. The indication information field is indicated by using 2 bits, where 00 indicates that a second response message for the DMRS group 1 further exists, but a second response message for the DMRS group 2 does not exist. In this case, the UE 1 to the UE 8 may continue to listen, and the UE 9 to the UE 16 stop listening, and 10 indicates that a second response message for the DMRS group 1 and the DMRS group 2 does not exist. In this case, the UE 1 to the UE 8 stop listening, and the UE 9 to the UE 16 also stop listening. The descriptions are made as an example herein in this application, and constitute no specific limitation.

**Table 3**

| Indication information field | |
|---|---|
| 00 | UE that selects the DMRS group 1 continues to listen and UE that selects the DMRS group 2 stops listening. |
| 10 | UE that selects the DMRS group 1 and the DMRS group 2 stops listening. |
| 01 | UE that selects the DMRS group 1 stops listening and UE that selects the DMRS group 2 continues to listen. |
| ... | ... |

In addition, each of the plurality of bits may correspond to one DMRS group. Herein, an example in which the indication information field indicates, by using 1, that the gNB delivers the second response message for the DMRS group, and indicates, by using 0, that the gNB does not deliver the second response message for the DMRS group is used for description. For example, the UE 1 to the UE 8 select a DMRS in the DMRS group 1 to send the first information, the UE 9 to the UE 16 select a DMRS in the DMRS group 2 to send the first information, and the UE 17 to the UE 24 select a DMRS in the DMRS group 3 to send the first information. The indication information field is indicated by using 3 bits. A first bit indicates whether a second response message for the DMRS group 1 further exists, a second bit indicates whether a second response message for the DMRS group 2 further exists, and a third bit indicates whether a second response message for the DMRS group 3 further exists. As shown in Table 4, 110 indicates that a second response message for the DMRS group 1 and the DMRS group 2 further exists, but a second response message for the DMRS group 3 does not exist. In this case, the UE 1 to the UE 8 may continue to listen, the UE 9 to the UE 16 may also continue to listen, and the UE 9 to the UE 16 stop listening.

Table 4

| Indication information field | |
|---|---|
| 110 | UE that selects the DMRS group 1 and the DMRS group 2 continues to listen and UE that selects the DMRS group 3 stops listening. |
| 100 | UE that selects the DMRS group 1 continues to listen and UE that selects the DMRS group 2 and the DMRS group 3 stops listening. |
| 001 | UE that selects the DMRS group 1 and the DMRS group 3 stops listening and UE that selects the DMRS group 2 continues to listen. |
| ... | ... |
| 000 | All UE that selects the DMRS group 1, the DMRS group 2, or the DMRS group 3 stops listening. |

To better describe the solutions of this application, the following describes with reference to that the first information is random access information or grant free transmission data, and that the indication information field indicates different information. Details are as follows:

Case 1.1: First information is random access information, and an indication information field indicates, by using different values of bits, whether to send a second response message.

First, an execution procedure that may be involved in embodiments of this application in actual application is briefly described by using the first communication apparatus as a terminal and the second communication apparatus as a base station.

Step 1: A terminal receives configuration information delivered by a base station, and the terminal may determine an available PRACH resource and a preamble resource based on the configuration information. The base station may deliver the configuration information by using an RRC message (for example, a system message), a PDCCH, or a MAC CE. For 2-step RA, the configuration information further includes a resource configuration of the PUSCH.

The PRACH resource is a PRACH time-frequency resource, and the preamble resource may be one of the following sequences:

Sequence 1: AZC sequence that is determined by a root sequence index u, a cyclic shift interval Ncs, and a cyclic shift index v.

Sequence 2: An m sequence, where an M sequence of which a length is $2^m-1$ (m>1) may be defined as $c(n) = (-1)^{Tr(a^n)}$, where

$$\mathrm{Tr}(x) = \sum_{l=0}^{m-1} x^{2^l},$$

where

$$x(\bar{i}+5) = \left(x(\bar{i}+2) + x(\bar{i})\right) \bmod 2$$

$$0 \le \bar{i} \le 57, x(0) = 0, \quad x(1) = 0, \quad x(2) = 0, \quad x(3) = 0, \quad x(4) = 1$$

Sequence 3: A PN sequence. A PN sequence used in a 5G NR system is generated by using a Gold sequence of which a length is 31.

$$c(n) = \left(x_1(n + N_C) + x_2(n + N_C)\right) \bmod 2$$

$$x_1(n + 31) = \left(x_1(n + 3) + x_1(n)\right) \bmod 2$$

$$x_2(n + 31) = \left(x_2(n + 3) + x_2(n + 2) + x_2(n + 1) + x_2(n)\right) \bmod 2$$

$c(n)$ is the generated PN sequence, a length is $M_{PN}$, n = 0,1,..., $M_{PN}$-1, $N_C$ = 1600, an initial value of a first M sequence $x_1$(n) is $x_1(0)$ =1,$x_1$(n) = 0,n = 1,2,...,30, and an initial value of a second M sequence $x_2(n)$ is

$$c_{\text{init}} = \sum_{i=0}^{30} x_2(i) \cdot 2^i$$.

Sequence 4: A DFT sequence, where the DFT sequence may be considered as one row or one column in a DFT matrix, and an element of the DFT matrix is defined as $x_{pq} = \omega^{-pq}$, where $\omega = e^{-2\pi i/N}$, N is a sequence length, i is an imaginary unit, and i2=-1.

Sequence 5: An Alltop sequence, where the Alltop sequence is defined as c($\gamma$, $\omega$) = $g(\gamma, \omega)$, for example,

$$g(\gamma, \omega) = e^{-j2\pi \frac{(n+\omega)^3 + \gamma n}{L}}$$, $0 \leq n \leq L - 1$, and $0 \leq \omega \leq L - 1$.

Sequence 6: A Gold sequence, where the Gold sequence is a modulo-two sum of two M sequences.

In actual application, the sequence is not limited to the foregoing sequence, and may be another sequence. This is not described herein.

Step 2: The terminal selects a PRACH and a preamble from the PRACH resource and the preamble resource that are determined in step 1, sends an Msg1 or an MsgA to the base station, and determines an RNTI. The terminal may determine the RNTI based on the selected PRACH time-frequency resource, or may obtain the RNTI from the configuration information delivered by the base station. This is not specifically limited in this application. In addition, for an implementation in which the terminal determines the RNTI based on the PRACH time-frequency resource, refer to section 5.1.3 or 5.1.3a in TS 38.321.

Step 3: After sending the Msg1 or the MsgA, the terminal starts a time window, listens to a PDCCH in the time window by using the RNTI determined in step 2, and receives a PDSCH scheduled by the PDCCH (the PDSCH carries an RAR).

Step 4: The terminal obtains an indication information field from the PDCCH detected through listening or the received PDSCH, and determines, based on the indication information field, whether to continue to listen to the PDCCH by using the determined RNTI.

In the foregoing step 3 and step 4, the indication information field may be carried in the PDCCH, or may be carried in the PDSCH scheduled by the PDCCH, for example, carried in the MAC CE. The RAP ID or the CR ID carried in the PDSCH described in FIG. 3 and FIG. 4 is used to feed back which preamble or terminal the RAR included in the PDSCH currently sent by the base station is for. When the terminal finds that the RAP ID or the CR ID is different from the ID of the preamble or CR ID sent by the terminal (that is, the PDSCH is not for the preamble sent by the terminal or is not for the terminal), the terminal further continues to listen to the PDCCH in the time window. However, in this application, the indication information field indicates whether the base station continues to deliver a response message or indicates whether the terminal continues to listen to a response message (that is, listen to the PDCCH), and corresponding terminal behaviors are different. Even if the terminal finds that the RAP ID or the CR ID is different from the ID of the preamble or the CR ID sent by the terminal, if the indication information indicates that the base station stops delivering a response message or indicates that the terminal stops listening a response message, the terminal also stops listening the PDCCH.

The indication information field may include only 1 bit. When a value of the bit is 1, it indicates that the base station may further deliver a response message in the time window. In this case, a corresponding terminal continues to listen to the PDCCH in the time window. When a value of the bit is 0, it indicates that the base station stops delivering a response message in the time window, and the corresponding terminal stops the time window and stops listening to the PDCCH. In addition, the indication information field may further indicate, as shown in Table 1 or Table 2, whether each preamble group listens to the second response message (that is, listens to the PDCCH).

Step 5: If the terminal determines, based on the obtained indication information field, not to continue to listen to the PDCCH by using the determined RNTI, the terminal stops listening to the PDCCH.

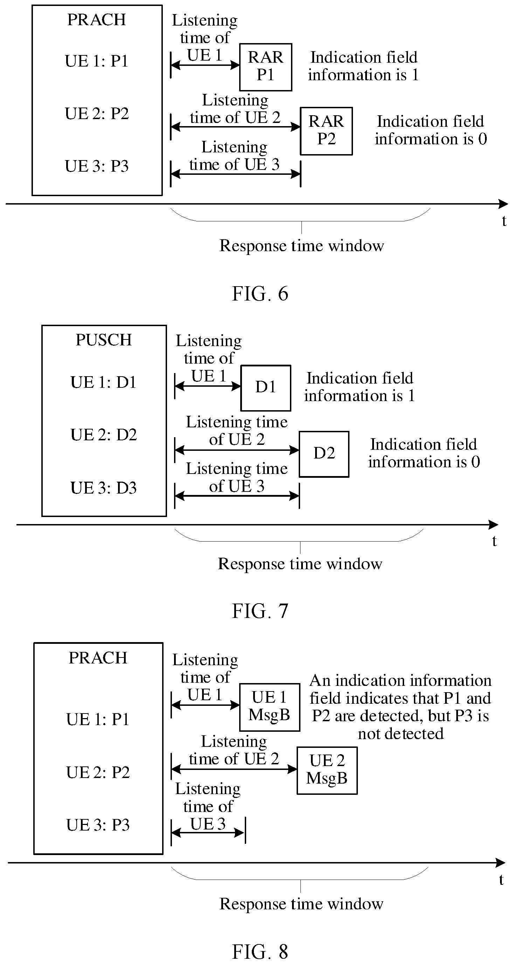

FIG. 6 takes a 4-step RACH as an example to describe case 1.1. It is assumed that three terminals (UE 1, UE 2, and UE 3) respectively send three different preambles (P1, P2, and P3) by using the same PRACH time-frequency resource, and the base station detects only P1 and P2, but does not detect P3. It is assumed that the base station first delivers a response message for P1, the response message carries 1-bit indication field information, and indication field information is 1, indicating that the base station further delivers the response message. In this case, after obtaining the indication field information, the UE 2 and the UE 3 further continue to listen to the PDCCH. The base station continues to deliver a response message for P2, the response message carries 1-bit indication information and is set to 0, indicating that the base station stops delivering the response message. After obtaining the indication field information, the UE 3 stops listening to the PDCCH, and time for the UE 3 to listen to the response is less than a length of the time window. However, in the conventional technologies, when the base station does not detect P3, the UE 3 listens to the PDCCH in an entire response time window. Therefore, compared with the conventional technologies, in this application, invalid listening can be reduced, power consumption can be reduced, and preamble retransmission can be triggered as early as possible, so that an access delay of random access can be reduced.

Case 1.2: First information is grant free transmission data, and an indication information field indicates, by using different values of bits, whether to send a second response message.

In case 1.2, compared with case 1.1, configuration information is different from the configuration information delivered by the base station in step 1. The terminal device may determine an available PUSCH resource and an available DMRS resource based on the configuration information. Step 2: A terminal selects a PUSCH resource and a DMRS from the PUSCH resource and the DMRS resource determined in step 1, sends the PUSCH to a base station, and determines an RNTI. The terminal may determine the RNTI based on the selected PUSCH time-frequency resource, or may obtain the RNTI from the configuration information delivered by the base station. This is not specifically limited in this application. In step 2, an implementation in which the terminal determines the RNTI based on the PUSCH time-frequency resource may be to determine a RA-RNTI or an MsgB-RNTI similar to a specification in section 5.1.3 or 5.1.3a in TS 38.321. Step 3: After sending the PUSCH, the terminal starts a time window, listens to the PDCCH in the time window by using the RNTI determined in step 2, and receives a PDSCH scheduled by the PDCCH (the PDSCH carries a response message). Step 4 and step 5 are the same as the steps in the foregoing case 1.1. For understanding, refer to the steps. Details are not described herein again.

FIG. 7 takes grant free transmission as an example to describe case 1.2. It is assumed that three terminals (UE 1, UE 2, and UE 3) respectively send three different DMRSs (D1, D2, and D3) by using a PUSCH time-frequency resource, and the base station detects only D1 and D2, but does not detect D3. It is assumed that the base station first delivers a response message for D1, the response message carries 1-bit indication field information, and indication field information is 1, indicating that the base station further delivers the response message. In this case, after obtaining the indication field information, the UE 2 and the UE 3 further continue to listen to the PDCCH. The base station continues to deliver a response message for D2, the response message carries 1-bit indication information and is set to 0, indicating that the base station stops delivering the response message. After obtaining the indication field information, the UE 3 stops the time window and stops listening to the PDCCH, and time for the UE 3 to listen to the response is less than a length of the time window. However, in the conventional technologies, when the base station does not detect D3, the UE 3 listens to the PDCCH in an entire response time window. Therefore, compared with the conventional technologies, in this application, invalid listening can be reduced, power consumption can be reduced, and DMRS retransmission can be triggered as early as possible, so that an access delay of random access can be reduced.

Case 2.1: First information is random access information, and an indication information field indicates, by using different values of bits, whether a first message is detected.

Case 2.1 is similar to case 1.1, and the execution procedures involved are consistent, but only indication information of the indication information field is different. In case 2.1, the indication information field may indicate information about a preamble that is detected by the base station and/or that is not detected, for example, an RAP ID. Corresponding terminal behaviors are different. Even if the terminal finds that the RAP ID or the CR ID is different from the ID of the preamble or CR ID sent by the station, if the indication information indicates that the base station does not detect the preamble sent by the terminal, the terminal stops listening to the PDCCH.

FIG. 8 takes a 2-step RACH as an example to describe case 2.1. It is assumed that three terminals (UE 1, UE 2, and UE 3) respectively send three different preambles (P1, P2, and P3) by using the same PRACH time-frequency resource, and the base station detects only P1 and P2, but does not detect P3. It is assumed that the base station first delivers a response message for P1 or the UE 1, and the response message carries indication information, indicating that the base station detects P1 and P2, but does not detect P3. After the UE 2 and the UE 3 obtain the indication information, the UE 2 continues to listen to the PDCCH, and the UE 3 stops listening to the PDCCH, and time for the UE 3 to listen to the response is less than a length of the time window. After detecting, through listening, a response message for the UE 2, the UE 2 stops listening. However, in the conventional technologies, when the base station does not detect P3, the UE 3 listens to the PDCCH in an entire response time window. Therefore, compared with the conventional technologies, in this application, invalid listening can be reduced, power consumption can be reduced, and preamble retransmission can be triggered as early as possible, so that an access delay of random access can be reduced.

Case 2.2: First information is grant free transmission data, and an indication information field indicates, by using different values of bits, whether a first message is detected.

Case 2.2 is similar to case 1.2, and the execution procedures involved are consistent, but only indication information of the indication information field is different. In case 2.2, the indication information field may indicate information about a DMRS that is detected by the base station and/or that is not detected, for example, a DMRS ID. Corresponding terminal behaviors are different. If the indication information indicates that the base station does not detect the DMRS sent by the terminal, the terminal stops listening to the PDCCH.

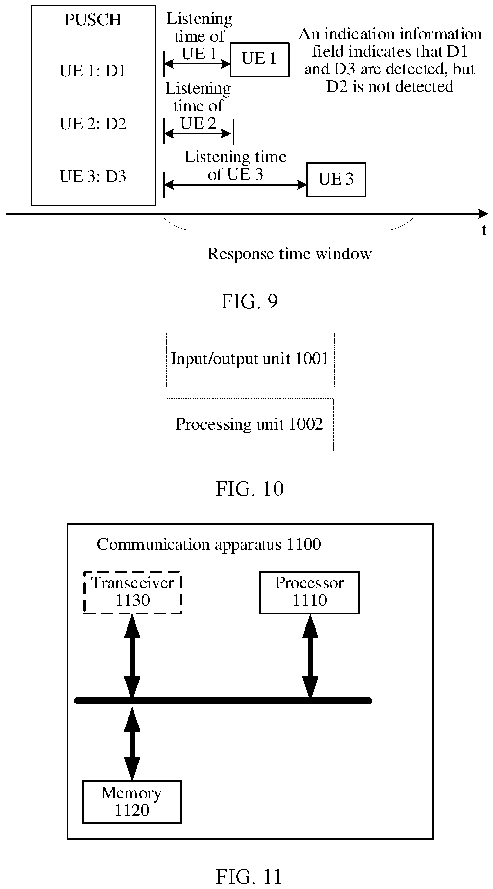

FIG. 9 takes grant free transmission as an example to describe case 2.2. It is assumed that three terminals (UE 1, UE 2, and UE 3) respectively send three different DMRSs (D1, D2, and D3) by using the same PUSCH time-frequency resource, and the base station detects only D1 and D3, but does not detect D2. It is assumed that the base station first delivers a response message for D1 or the UE 1, and the response message carries indication information, indicating that the base station detects D1 and D3, but does not detect D2. After the UE 3 and the UE 2 obtain the indication information, the UE 3 continues to listen to the PDCCH until a response for the UE 3 is received, and the UE 2 stops listening to the PDCCH, and time for the UE 2 to listen to the response is less than a length of the time window. However, in the conventional technologies, when the base station does not detect D2, the UE 2 listens to the PDCCH in an entire response time window. Therefore, compared with the conventional technologies, in this application, invalid listening can be reduced, power consumption can be reduced, and DMRS retransmission can be triggered as early as possible, so that an access delay of random access can be reduced.

FIG. 10 shows a communication apparatus according to an embodiment of this application. The communication apparatus includes an input/output unit 1001 and a processing unit 1002. In actual application, the input/output unit 1001 may be implemented by using the same data processing chip, or may be implemented by using different data processing chips. This is not specifically limited in this application. The communication apparatus may be the first communication apparatus and the second communication apparatus. This is not specifically limited in this application.

When the communication apparatus is the first communication apparatus, that is, a terminal device, or the like, the input/output unit 1001 may send first information by using a first resource, and receive a first response message. The first response message corresponds to the first resource. The first response message includes an indication information field. The indication information field indicates whether a second response message further exists, and the second response message corresponds to the first resource. The processing unit 1002 continues to listen to the second response message if it is determined that the first response message does not correspond to the first communication apparatus, and the indication information field indicates that the second response message exists.

When the communication apparatus is the second communication apparatus, that is, a network device, or the like, the input/output unit 1001 may receive first information by using a first resource, and send a first response message. The first response message corresponds to the first resource. The first response message includes an indication information field. The indication information field indicates whether a second response message further exists, and the second response message corresponds to the first resource. The processing unit 1002 sends the second response message if the second response message exists in the indication information field.

It should be noted that the first resource may be understood as a time-frequency resource. Different first communication apparatuses may transmit a message by using the time domain resource. For example, UE 1, UE 2, and UE 3 all send the first information by using the first resource. The first resource may be a time-frequency resource, or may be a set of a plurality of resources including the same time domain but different frequency domains, or the same frequency domain but different time domains, or different time domains and frequency domains. In this case, the UE may select one of the resources to send the first information. The first information may be data transmitted by the first communication apparatus to the second communication apparatus or access information for establishing a communication connection (for example, an RRC connection) between the first communication apparatus and the second communication apparatus. This is not specifically limited in this application. Herein, the same time domain means that time domain resources completely overlap, the same frequency domain means that frequency domain resources completely overlap. Different time domains mean that time domain resources partially overlap or do not overlap at all, and different frequency domains mean that frequency domain resources partially overlap or do not overlap at all.

It should be further noted that, in actual application, a plurality of first communication apparatuses may transmit data to the second communication apparatus, or establish a communication connection to the second communication apparatus. In this case, the second communication apparatus may receive a plurality of first messages. Then, the second communication apparatus sends the first response message for the plurality of first messages. Each first communication apparatus determines, based on indication information of the indication information field in the first response message, whether to continue to listen. For example, the UE 1 listens to the first response message from a gNB, and finds that the first response message is not for the UE 1. However, the first response message indicates that the second response message exists, then the UE 1 continues to listen. The UE 2 listens to the first response message from the gNB. If the first response message is for the UE 2, the UE 2 stops listening.

Compared with continuously listening to the response message in an entire listening period, in this application, carrying the indication information field in the first response message indicates whether the second response message exists. The first communication apparatus may determine, based on existence of the second response message, whether to continue to listen. When determining that the second response message does not exist, that is, when determining that the second communication apparatus stops sending the second response message, the first communication apparatus stops listening, so that power consumption can be reduced, and data can be resent or a connection to the second communication apparatus can be established, thereby improving data processing efficiency and access efficiency.

In an optional manner, if the first response message corresponds to the first communication apparatus, or if the first response message does not correspond to the first communication apparatus, and the indication information field indicates that the second response message does not exist, the listening is stopped.

For example, the UE 1 listens to the first response message from the gNB, and finds that the first response message is for the UE 1. The UE 1 stops listening, or the UE 1 determines that the second response message does not exist, and also stops listening. In this manner, power consumption of the first communication apparatus can be reduced.

In an optional manner, the indication information field includes 1 bit. The bit may indicate whether the second communication apparatus delivers the second response message. For example, the indication information field indicates, by using 1, that the second communication apparatus delivers the second response message, and indicates, by using 0, that the second communication apparatus does not deliver the second response message. Alternatively, the indication information field may indicate in another manner. This is not specifically limited herein in this application. In this case, after receiving the first response message, the first communication apparatus may determine, based on a value of the bit in the indication information field, whether to continue to listen. For example, if the UE 1 receives the first response message, and the first response message is not for the UE 1, the UE 1 determines the value of the bit in the indication information field. If the value is 1, the UE 1 continues to listen, and if the value is 0, the UE 1 stops listening. In this manner, power consumption of the first communication apparatus can be reduced.

In an optional manner, the indication information field includes X bits, the X bits indicate a plurality of preambles or a plurality of pieces of reference signal information, $X \geq 2$, and values corresponding to the X bits include a value indicating that the second response message does not exist. The reference signal herein may be a demodulation reference signal (demodulation reference signal, DMRS), a sounding reference signal (sounding reference signal, SRS), or the like.

It should be noted that, in actual application, the preamble or the reference signal may be grouped. One or more bits in the indication information field indicate whether a second response message exists for a preamble group or a reference signal group. For example, the UE 1 to UE 8 select a preamble or a reference signal in a preamble or reference signal group 1 to send the first information. UE 9 to UE 16 select a preamble or a reference signal in a preamble or reference signal group 2 to send the first information. UE 17 to UE 24 select a preamble or a reference signal in a preamble or reference signal group 3 to send the first information. The indication information indicates, by using 3 bits, whether a second response message for these preamble or reference signal groups exists. For example, 000 indicates that a second response message for the preamble or reference signal group 1 and the preamble or reference signal group 2 further exists, but a second response message for the preamble or reference signal group 3 does not exist. In this case, the UE 1 to the UE 8 may choose to continue to listen, the UE 9 to the UE 16 may also choose to continue to listen, and the UE 17 to the UE 24 stop listening. 001 indicates that a second response message for the preamble or reference signal group 1 further exists, but a second response message for the preamble or reference signal group 2 and the preamble or reference signal group 3 does not exist. In this case, the UE 1 to the UE 8 may choose to continue to listen, the UE 9 to the UE 16 and the UE 17 to the UE 24 stop listening. 111 indicates that no second response message for the three groups of preambles or reference signals exists. In this case, none of the UE 1 to the UE 24 needs to continue to listen. The descriptions are made as an example herein in this application, and constitute no specific limitation.

In an optional manner, each of the X bits corresponds to one preamble group or one DMRS group. Herein, only an example in which each bit corresponds to one preamble group is used for description. For example, the UE 1 to the UE 8 select the preamble or reference signal group 1, the UE 9 to the UE 16 select the preamble or reference signal group 2, the UE 17 to the UE 24 select the preamble or reference signal group 3. The indication information field is indicated by using 3 bits, where 110 indicates that a second response message for the preamble or reference signal group 1 and the preamble or reference signal group 2 further exists, but a second response message for the preamble or reference signal group 3 does not exist. In this case, the UE 1 to the UE 8 may choose to continue to listen, the UE 9 to the UE 16 may also choose to continue to listen, and the UE 17 to the UE 24 stop listening, and 000 indicates that no second response message for the three groups of preambles or reference signals exists. In this case, none of the UE 1 to the UE 24 needs to continue to listen.

In an optional manner, that the first response message does not correspond to the first communication apparatus indicates that the first response message does not include a preamble identifier sent by the first communication apparatus, and the first response message does not include information used for identifying the first communication apparatus, for example, an ID of the first communication apparatus. In this application, the first communication apparatus may determine, based on whether a preamble identifier corresponding to the first response message exists in the first response message, whether the first response message is for the first communication apparatus.

In an optional manner, the first communication apparatus listens to the first response message or the second response message in a preset time window. The second communication apparatus sends the first response message or the second response message in the preset time window. A length of the preset time window of the first communication apparatus may be the same as or different from a length of the preset time window of the second communication apparatus. This is not specifically limited in this application.

In an optional manner, the first information is random access information or grant free transmission data. Because a communication connection may have been established between different first communication apparatuses and the second communication apparatus, data only needs to be transmitted to the second communication apparatus. The first information sent by the first communication apparatus may be the grant free transmission data. However, no communication connection may be established between the first communication apparatus and the second communication apparatus. Therefore, the random access information needs to be sent. This is not specifically limited in this application, and needs to be specifically determined with reference to an actual application scenario. It may be understood that a difference between the random access information and the grant free transmission data lies in that the random access information includes a preamble, and the grant free transmission data does not include a preamble.

In addition, as shown in FIG. 11, this application further provides a communication apparatus 1100. For example, the communication apparatus 1100 may be a chip or a chip system. Optionally, in embodiments of this application, the chip system may include a chip, or may include a chip and another discrete device.

The communication apparatus 1100 may include at least one processor 1110, and the communication apparatus 1100 may further include at least one memory 1120 configured to store a computer program, program instructions, and/or data. The memory 1120 is coupled to the processor 1110. The coupling in embodiments of this application may be an indirect coupling or a communication connection between apparatuses, units, or modules in an electrical form, a mechanical form, or another form, and is used for information exchange between the apparatuses, the units, or the modules. The processor 1110 and the memory 1120 may operate cooperatively. The processor 1110 may execute the computer program stored in the memory 1120. Optionally, the at least one memory 1120 may also be integrated with the processor 1110.

Optionally, in actual application, the communication apparatus 1100 may include or may not include a transceiver 1130. A dashed box is used as an example in the figure. The communication apparatus 1100 may exchange information with another device by using the transceiver 1130. The transceiver 1130 may be a circuit, a bus, a transceiver, or any other apparatus that may be configured to exchange information.

In a possible implementation, the communication apparatus 1100 may be used in the foregoing terminal device, or may be the foregoing first communication apparatus, or may be the foregoing second communication apparatus. The memory 1120 stores a computer program, program instructions, and/or data necessary for implementing a function of the relay device in any one of the foregoing embodiments. The processor 1110 may execute the computer program stored in the memory 1120, to complete the method in any one of the foregoing embodiments.

A specific connection medium between the transceiver 1130, the processor 1110, and the memory 1120 is not limited in embodiments of this application. In embodiments of this application, the memory 1120, the processor 1110, and the transceiver 1130 are connected through a bus in FIG. 11. The bus is represented by a bold line in FIG. 11. A manner of connection between other components is merely an example for description, and is not limited thereto. The bus may be classified into an address bus, a data bus, a control bus, and the like. For ease of representation, only one bold line is used to represent the bus in FIG. 11, but this does not mean that there is only one bus or only one type of bus. In embodiments of this application, the processor may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware and software modules in the processor.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. Alternatively, the memory in embodiments of this application may be a circuit or any other apparatus that can implement a storage function, and is configured to store a computer program, program instructions, and/or data.

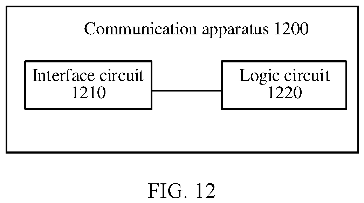

Based on the foregoing embodiments, refer to FIG. 12, embodiments of this application further provide another communication apparatus 1200, including an interface circuit 1210 and a logic circuit 1220. The interface circuit 1210 may be understood as an input/output interface, and may be configured to perform the same operation steps as those of the input/output unit shown in FIG. 10 or the transceiver shown in FIG. 11. Details are not described herein again in this application. The logic circuit 1220 may be configured to run code instructions to perform the method in any one of the foregoing embodiments, and may be understood as the processing unit in FIG. 10 or the processor in FIG. 11, and may implement the same function as the processing unit or the processor. Details are not described herein again in this application.

Based on the foregoing embodiments, embodiments of this application further provide a readable storage medium. The readable storage medium stores instructions. When the instructions are executed, the method performed in any one of the foregoing embodiments is implemented. The readable storage medium may include any medium that can store program code, such as a USB flash drive, a removable hard disk, a read-only memory, a random access memory, a magnetic disk, or an optical disc.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) in which computer-usable program code is included.

This application is described with reference to the flowcharts and/or the block diagrams of the method, the apparatus (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

**Claims**

1. A data transmission method, applied to a first communication apparatus, comprising:

   sending first information by using a first resource;
   receiving a first response message, wherein the first response message corresponds to the first resource, the first response message comprises an indication information field, the indication information field indicates whether a second response message further exists, and the second response message corresponds to the first resource; and
   if the first response message does not correspond to the first communication apparatus, and the indication information field indicates that the second response message exists, continuing to listen to the second response message.

2. The method according to claim 1, wherein if the first response message corresponds to the first communication apparatus, or if the first response message does not correspond to the first communication apparatus, and the indication information field indicates that the second response message does not exist, stopping listening.

**3.** The method according to claim 1 or 2, wherein the indication information field comprises 1 bit.

**4.** The method according to any one of claims 1 to 3, wherein the indication information field comprises X bits, the X bits indicate a plurality of preambles preambles or a plurality of demodulation reference signals DMRSs, X ≥ 2, and values corresponding to the X bits comprise a value indicating that the second response message does not exist.

**5.** The method according to claim 4, wherein each of the X bits corresponds to one preamble group or one DMRS group.

**6.** The method according to claim 4 or 5, wherein that the first response message does not correspond to the first communication apparatus indicates that the first response message does not comprise a preamble identifier sent by the first communication apparatus or an identifier of the first communication device.

**7.** The method according to any one of claims 1 to 6, wherein the first response message or the second response message is listened in a preset time window.

**8.** The method according to any one of claims 1 to 7, wherein the first information is random access information or grant free transmission data.

**9.** A data transmission method, applied to a second communication apparatus, comprising:

receiving first information by using a first resource;
sending a first response message, wherein the first response message corresponds to the first resource, the first response message comprises an indication information field, the indication information field indicates whether a second response message further exists, and the second response message corresponds to the first resource; and
if the second response message exists in the indication information field, sending the second response message.

**10.** The method according to claim 9, wherein the indication information field comprises 1 bit.

**11.** The method according to claim 9 or 10, wherein the indication information field comprises X bits, the X bits indicate a plurality of preambles preambles or a plurality of demodulation reference signals DMRSs, X ≥ 2, and values corresponding to the X bits comprise a value indicating that the second response message does not exist.

**12.** The method according to claim 11, wherein each of the X bits corresponds to one preamble group or one DMRS group.

**13.** The method according to any one of claims 9 to 12, wherein the first response message or the second response message is sent in a preset time window.

**14.** The method according to any one of claims 9 to 13, wherein the first information is random access information or grant free transmission data.

**15.** A first communication apparatus, comprising:

an input/output unit, configured to send first information by using a first resource, and receive a first response message, wherein the first response message corresponds to the first resource, the first response message comprises an indication information field, the indication information field indicates whether a second response message further exists, and the second response message corresponds to the first resource; and
a processing unit, configured to: if the first response message does not correspond to the first communication apparatus, and the indication information field indicates that the second response message exists, continue to listen to the second response message.

**16.** The apparatus according to claim 15, wherein the processing unit is further configured to: if the first response message corresponds to the first communication apparatus, or if the first response message does not correspond to the first communication apparatus, and the indication information field indicates that the second response message does not exist, stop listening.

**17.** The apparatus according to claim 15 or 16, wherein the indication information field comprises 1 bit.

18. The apparatus according to any one of claims 15 to 17, wherein the indication information field comprises X bits, the X bits indicate a plurality of preambles preambles or a plurality of demodulation reference signals DMRSs, $X \geq 2$, and values corresponding to the X bits comprise a value indicating that the second response message does not exist.

19. The apparatus according to claim 18, wherein each of the X bits corresponds to one preamble group or one DMRS group.

20. The apparatus according to claim 18 or 19, wherein that the first response message does not correspond to the first communication apparatus indicates that the first response message does not comprise a preamble identifier sent by the first communication apparatus or an identifier of the first communication device.

21. The apparatus according to any one of claims 15 to 20, wherein the first response message or the second response message is listened in a preset time window.

22. The apparatus according to any one of claims 15 to 21, wherein the first information is random access information or grant free transmission data.

23. A second communication apparatus, comprising:

an input/output unit, configured to receive first information by using a first resource, and send a first response message, wherein the first response message corresponds to the first resource, the first response message comprises an indication information field, the indication information field indicates whether a second response message further exists, and the second response message corresponds to the first resource; and
a processing unit, configured to send the second response message if the second response message exists in the indication information field.

24. The apparatus according to claim 23, wherein the indication information field comprises 1 bit.

25. The apparatus according to claim 23 or 24, wherein the indication information field comprises X bits, the X bits indicate a plurality of preambles preambles or a plurality of demodulation reference signals DMRSs, $X \geq 2$, and values corresponding to the X bits comprise a value indicating that the second response message does not exist.

26. The apparatus according to claim 23, wherein each of the X bits corresponds to one preamble group or one DMRS group.

27. The apparatus according to any one of claims 23 to 26, wherein the first response message or the second response message is sent in a preset time window.

28. The apparatus according to any one of claims 23 to 27, wherein the first information is random access information or grant free transmission data.

29. A communication apparatus, comprising at least one processor and a memory, wherein

the memory is configured to store a computer program or instructions; and
the at least one processor is configured to execute the computer program or the instructions, so that the method according to any one of claims 1 to 8 or any one of claims 9 to 14 is performed.

30. A computer-readable storage medium, wherein the computer-readable storage medium stores instructions, and when the instructions are executed by a computer, the method according to any one of claims 1 to 8 or any one of claims 9 to 14 is performed.

31. A computer program product comprising a computer program or instructions, wherein when the computer program product is run on a computer, the method according to any one of claims 1 to 8 or any one of claims 9 to 14 is performed.

FIG. 1A

FIG. 1B

| Base station | | Terminal |
|---|---|---|
| | ← Random access → | |
| | ← SR/BSR → | |
| | → PDCCH → | |
| | ← PUSCH | |

FIG. 2

| Base station | | Terminal |
|---|---|---|
| | ← MsgA | |
| | MsgB → | |

FIG. 3

| Base station | | Terminal |
|---|---|---|
| | ← Msg1 | |
| | Msg2 → | |
| | ← Msg3 | |
| | Msg4 → | |

FIG. 4

| UE 1 | UE 2 | UE 3 | gNB |
|---|---|---|---|

Step 501A: Send first information by using a first resource →

Step 501B: Send first information by using the first resource →

Step 501C: Send first information by using the first resource →

Step 502: Send a first response message ←

Step 503A: If it is determined that the first response message does not correspond to the UE 1, and an indication information field indicates that a second response message exists, continue to listen to the second response message

Step 503B: If it is determined that the first response message corresponds to the UE 2, stop listening

Step 503C: If it is determined that the first response message does not correspond to the UE 3, and the indication information field indicates that the second response message does not exist, stop listening

FIG. 5

PRACH

UE 1: P1

UE 2: P2

UE 3: P3

Listening time of UE 1

RAR P1

Indication field information is 1

Listening time of UE 2

RAR P2

Indication field information is 0

Listening time of UE 3

Response time window

t

FIG. 6

PUSCH

UE 1: D1

UE 2: D2

UE 3: D3

Listening time of UE 1

D1

Indication field information is 1

Listening time of UE 2

D2

Indication field information is 0

Listening time of UE 3

Response time window

t

FIG. 7

PRACH

UE 1: P1

UE 2: P2

UE 3: P3

Listening time of UE 1

UE 1 MsgB

An indication information field indicates that P1 and P2 are detected, but P3 is not detected

Listening time of UE 2

UE 2 MsgB

Listening time of UE 3

Response time window

t

FIG. 8

24

FIG. 9

FIG. 10

FIG. 11

Communication apparatus 1200

| Interface circuit 1210 | Logic circuit 1220 |

FIG. 12

**EP 4 333 509 A1**

## INTERNATIONAL SEARCH REPORT

| | International application No. |
|---|---|
| | **PCT/CN2022/089920** |

### A. CLASSIFICATION OF SUBJECT MATTER

H04W 52/02(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; EPTXT; USTXT; VEN; WOTXT; DWPI; IEEE; CNKI; 3GPP: 资源, 前导, 响应, 随机接入, 指示, 继续, 停止, 监听, 窗口, 比特, 标识, resource, preamble, RAR, RACH, window, bit, ID

### C. DOCUMENTS CONSIDERED TO BE RELEVANT

| Category* | Citation of document, with indication, where appropriate, of the relevant passages | Relevant to claim No. |
|---|---|---|
| PX | CN 113260075 A (DATANG MOBILE COMMUNICATIONS EQUIPMENT CO., LTD.) 13 August 2021 (2021-08-13)<br>description, paragraphs [0037]-[0129] | 1-31 |
| X | CN 107889272 A (BEIJING XINWEI TELECOM TECHNOLOGY INC.) 06 April 2018 (2018-04-06)<br>description, paragraphs [0002]-[0097] | 1-31 |
| X | CN 106664720 B (HUAWEI TECHNOLOGIES CO., LTD.) 22 October 2019 (2019-10-22)<br>description, paragraphs [0108]-[0282] | 1-31 |
| A | US 2020229241 A1 (COMCAST CABLE COMMUNICATIONS, LLC) 16 July 2020 (2020-07-16)<br>entire document | 1-31 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 June 2022** | **18 July 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

27

**INTERNATIONAL SEARCH REPORT**
Information on patent family members

International application No.

**PCT/CN2022/089920**

| Patent document cited in search report | | | Publication date (day/month/year) | Patent family member(s) | | | Publication date (day/month/year) |
|---|---|---|---|---|---|---|---|
| CN | 113260075 | A | 13 August 2021 | WO | 2021159907 | A1 | 19 August 2021 |
| CN | 107889272 | A | 06 April 2018 | | None | | |
| CN | 106664720 | B | 22 October 2019 | CN | 106664720 | A | 10 May 2017 |
| | | | | WO | 2016161650 | A9 | 20 April 2017 |
| | | | | WO | 2016161650 | A1 | 13 October 2016 |
| US | 2020229241 | A1 | 16 July 2020 | EP | 3681240 | A1 | 15 July 2020 |
| | | | | CA | 3067546 | A1 | 10 July 2020 |

Form PCT/ISA/210 (patent family annex) (January 2015)

**EP 4 333 509 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110580115